# EUROPÄISCHE PATENTSCHRIFT

(11) **EP 2 870 020 B1**
(45) Veröffentlichungstag und Bekanntmachung des Hinweises auf die Patenterteilung: **30.08.2017**
(21) Anmeldenummer: 13733307.6
(22) Anmeldetag: 02.07.2013
(51) Int. Cl.: B60L 11/08, B60L 11/02, B60L 1/00, B60L 11/12, B60L 3/00, B61C 9/24

(54) **VERSORGUNG VON ELEKTRISCHEN TRAKTIONSMOTOREN UND ZUSÄTZLICHEN ELEKTRISCHEN HILFSBETRIEBEN EINES SCHIENENFAHRZEUGS MIT ELEKTRISCHER ENERGIE**
SUPPLY OF ELECTRIC TRACTION MOTORS AND ADDITIONAL ELECTRIC AUXILIARY SYSTEMS OF A RAIL VEHICLE WITH ELECTRICAL ENERGY
ALIMENTATION EN ÉNERGIE ÉLECTRIQUE DE MOTEURS ÉLECTRIQUES DE TRACTION ET D'AUXILIAIRES ÉLECTRIQUES ADDITIONNELS D'UN VÉHICULE FERROVIAIRE

(30) Priorität: 03.07.2012 DE 102012211543
(43) Veröffentlichungstag der Anmeldung: 13.05.2015
(73) Patentinhaber: Bombardier Transportation GmbH, 10785 Berlin (DE)
(72) Erfinder: GERADTS, Karlheinz, CH-5603 Staufen AG (CH)
(74) Vertreter: Patentanwälte Bressel und Partner mbB
(86) Internationale Anmeldenummer: PCT/EP2013/063977
(87) Internationale Veröffentlichungsnummer: WO 2014/006065

(56) Entgegenhaltungen:
- WO-A2-2009/040211
- US-A1- 2006 025 902
- US-A1- 2011 080 040
- US-A1- 2011 315 043

## Beschreibung

Die Erfindung betrifft eine Anordnung zum Versorgen von elektrischen Traktionsmotoren in einem Schienenfahrzeug und zum Versorgen von zusätzlichen elektrischen Hilfsbetrieben für den Betrieb des Schienenfahrzeugs mit elektrischer Energie. Die Erfindung betrifft ferner ein Schienenfahrzeug mit einer solchen Anordnung. Außerdem betrifft die Erfindung eine Verwendung einer Anordnung zum Versorgen von elektrischen Traktionsmotoren und zusätzlichen elektrischen Hilfsbetrieben für bzw. während des Betriebes des Schienenfahrzeugs. Auch betrifft die Erfindung ein Verfahren zur Herstellung der Anordnung und des Schienenfahrzeugs.

Bei dem Schienenfahrzeug handelt es sich z.B. um eine Lokomotive. Die Erfindung ist jedoch nicht darauf beschränkt. Vielmehr kann das Schienenfahrzeug z.B. auch ein Zugverband sein.

Die Anordnung weist zumindest zwei Verbrennungsmotoren (insbesondere Dieselmotoren) auf, die jeweils mit einer elektrischen Maschine kombiniert sind. Während eines so genannten Generator-Betriebes der elektrischen Maschine generiert die elektrische Maschine elektrische Energie, indem sie von dem Verbrennungsmotor angetrieben wird. Die elektrische Energie steht somit in dem Schienenfahrzeug für die Versorgung von elektrischen Verbrauchern zur Verfügung. Bei den Verbrauchern handelt es sich insbesondere um den oder die Traktionsmotoren, mit denen eine Bewegung des Schienenfahrzeugs angetrieben wird, und um so genannte Hilfsbetriebe, die zwar nicht unmittelbar Traktion erzeugen, insbesondere aber für den Fahrbetrieb des Schienenfahrzeugs zwingend erforderlich sein können. Hilfsbetriebe können allgemein dadurch definiert werden, dass sie über einen eigenen Hilfsbetriebe-Wechselrichter oder eine Mehrzahl eigener Hilfsbetriebe-Wechselrichter aus dem üblicherweise vorhandenen Gleichspannungs-Zwischenkreis mit elektrischer Energie versorgt werden. Zu den Hilfsbetrieben gehören z.B. Ventilatoren und andere Kühleinrichtungen, die die Verbrennungsmotoren, die Traktionsmotoren und/oder andere für den Fahrbetrieb erforderliche Einrichtungen (z.B. Stromrichter) kühlen. Ferner ist für den Fahrbetrieb eine Bremsanlage erforderlich und gehören daher Komponenten der Bremsanlage wie Luftkompressor zu den Hilfsbetrieben. Weitere Beispiele für Hilfsbetriebe sind eine Feuerlöscheinrichtung des Schienenfahrzeugs, elektronische Einrichtungen zur Steuerung des Betriebs des Schienenfahrzeugs, Batterieladegeräte, für den Fahrbetrieb zumindest zeitweise erforderliche Heizungen, z.B. Scheibenheizung der Frontscheibe, und/oder Beleuchtungseinrichtung im Fahrerabteil. Optional können von den Hilfsbetrieben elektrische Einrichtungen unterschieden werden, die lediglich für den Komfort von Passagieren zur Verfügung stehen, wie zum Beispiel Leuchten in Fahrzeug-Abteilen. Solche elektrischen Einrichtungen werden üblicherweise in Zügen über die so genannte Zug-Sammelschiene mit elektrischer Energie versorgt. Die Zug-Sammelschiene ist nicht über den Hilfsbetriebe-Wechselrichter oder einen der Hilfsbetriebe-Wechselrichter mit dem Gleichspannungs-Zwischenkreis verbunden, sondern über einen eigenen Wechselrichter.

Es ist bekannt, dass die von den elektrischen Maschinen erzeugte elektrische Energie über zumindest einen Gleichrichter (im Folgenden: Generator-Gleichrichter, da von dem Generator erzeugter Wechselstrom gleichgerichtet wird) in einen Gleichspannungs-Zwischenkreis eingespeist wird. An den Gleichspannungszwischenkreis sind typischerweise mehrere Wechselrichter angeschlossen, die wiederum den Wechselstrom auf dem gewünschten elektrischen Spannungsniveau oder in dem gewünschten elektrischen Spannungsbereich erzeugen, der für die auf der Wechselspannungsseite angeschlossenen Verbraucher und Systeme benötigt wird. Zusätzlich zu den Wechselrichtern können auf deren Gleichspannungsseite Gleichsspannungswandler und/oder auf deren Wechselspannungsseite Transformatoren vorgesehen sein, um das Spannungsniveau zu verändern. Auch andere elektrische Konverter können an den Gleichspannungs-Zwischenkreis entweder direkt oder indirekt angeschlossen sein. Ferner können außer den genannten Hilfsbetrieben auch andere elektrische Verbraucher, wie z.B. für den Komfort von Passagieren vorhandene elektrische Einrichtungen wie Licht, Klimaanlage und Informationssysteme, mit elektrischer Energie aus dem Gleichspannungs-Zwischenkreis versorgt werden, z. B. über einen anderen Wechselrichter als die für den Fahrbetrieb erforderlichen Hilfsbetriebe.

Z.B. sind an den Gleichspannungs-Zwischenkreis angeschlossen: eine Mehrzahl von Traktionsmotoren des Schienenfahrzeugs über ein oder mehrere Traktionswechselrichter; eine Zugstromsammelschiene über einen zusätzlichen Konverter oder unmittelbar; für den Fahrbetrieb erforderliche Hilfsbetriebe über einen Hilfsbetriebe-Wechselrichter. Ferner können weitere Konverter an dem Zwischenkreis angeschlossen sein, z.B. zum Zweck der Umsetzung überflüssiger Energie, die beim Bremsen des Schienenfahrzeugs in den Zwischenkreis eingespeist wird, in Wärme. Ein Beispiel einer solchen Anordnung ist in WO 2009/077184 A1 beschrieben.

Die Erfindung betrifft speziell den Fall, dass mehr als ein Verbrennungsmotor vorhanden ist und jeweils zumindest eine elektrische Maschine mit dem Verbrennungsmotor gekoppelt ist. Es ist daher möglich, dass lediglich ein Teil der vorhandenen elektrischen Maschinen elektrische Energie erzeugt, während gleichzeitig ein anderer Teil der elektrischen Maschinen als Motor betrieben wird, insbesondere um den zugeordneten Verbrennungsmotor im Leerlaufbetrieb anzutreiben. Dies hat den Vorteil, dass die Kraftstoffzufuhr zu dem Verbrennungsmotor abgeschaltet werden kann. Alternativ ist es aber auch möglich, dass zumindest einer der Verbrennungsmotoren lediglich bei niedriger Drehzahl läuft und daher von der oder den zugeordneten elektrischen Maschinen lediglich eine geringe elektrische Leistung erzeugt wird, die z.B. nicht oder nicht nennenswert zu der elektrischen Leistung beiträgt, die in den Gleichspannungs-Zwischenkreis eingespeist wird.

Eine Mehrzahl von Verbrennungsmotor-Maschinen-Kombinationen ermöglicht daher einen Teillastbetrieb des Schienenfahrzeugs, d.h. einen Betrieb, in dem nicht die maximal mögliche elektrische Leistung benötigt wird. Unter einem Teillastbetrieb wird daher ein Betrieb verstanden, in dem die mechanische Leistung lediglich eines Teils der Verbrennungsmotoren ausreicht, um die erforderliche elektrische Leistung bereitzustellen. Neben einer Reduktion des Kraftstoffverbrauchs der Verbrennungsmotoren hat der Teillastbetrieb auch den Vorteil, dass die Geräuschbelastung der Umgebung geringer ist. Beispielsweise können vier Verbrennungsmotor-Maschinen-Kombinationen vorhanden sein, wobei vorzugsweise jede Kombination unabhängig von den anderen Kombinationen entweder im Leerlaufbetrieb oder am optimalen Leistungspunkt betrieben werden kann. Optional können für jede Kombination mehr als zwei Betriebsarten eingestellt werden, z.B. zusätzlich zu den beiden genannten Betriebsarten ein Betrieb mit mittlerer Leistung der als Generator betriebenen elektrischen Maschine.

Insbesondere wird hiermit für die weiteren möglichen Merkmale einer Anordnung mit mehreren Verbrennungsmotor-Maschinen-Kombinationen auf die internationale Patentanmeldung mit der Anmeldenummer PCT/EP 2012/052705 Bezug genommen, die am 16. Februar 2012 eingereicht wurde. Insbesondere wird der gesamte Inhalt dieser Anmeldung hiermit in die vorliegende Anmeldung aufgenommen.

Elektrische Hilfsbetriebe, die zusätzlich zu den elektrischen Traktionsmotoren vorhanden sind und aus dem Gleichspannungs-Zwischenkreis mit elektrischer Energie versorgt werden, umfassen insbesondere solche Hilfsbetriebe, die wie oben erwähnt für den Fahrbetrieb des Schienenfahrzeugs erforderlich sind. Wenn daher der Hilfsbetriebe-Wechselrichter, über den diese Hilfsbetriebe elektrisch mit dem Gleichspannungs-Zwischenkreis verbunden sind, ausfällt oder abgeschaltet werden muss, kann der Fahrbetrieb nicht fortgesetzt werden. Dies gilt, obwohl der Gleichspannungs-Zwischenkreis und die Versorgung der Traktionsmotoren aus dem Zwischenkreis unter Umständen noch funktionsfähig sind.

US 2011/0080040 A1 beschreibt eine Antriebsvorrichtung mit Dieselmotoren, die jeweils einem Generator Rotationsenergie zuführen, um einen Wechselstrom zu erzeugen, der einem entsprechenden Gleichrichter zugeführt wird. Jeder Gleichrichter ist elektrisch mit einem der Generatoren verbunden, um einen Gleichstrom zu erzeugen, der einem Gleichspannungszwischenkreis zugeführt wird. An den Gleichspannungszwischenkreis angeschlossene Umrichter wandeln das Gleichspannungssignal an dem Gleichspannungszwischenkreis in Wechselstrom um, um einen Antriebsmotor anzutreiben. Außerdem ist eine mit konstanter Geschwindigkeit laufende Maschine vorgesehen, die mit einem Generatorsystem verbunden ist, das Wechselstrom-Energie erzeugt. Wenn ein Schalter, der an das Generatorsystem angeschlossen ist, geschlossen wird, liefert das Generatorsystem Wechselstrom an andere Verbraucher als den Antriebsmotor.

Es ist eine Aufgabe der vorliegenden Erfindung, bei Anordnungen zum Versorgen von elektrischen Traktionsmotoren in einem Schienenfahrzeug und zum Versorgen von zusätzlichen elektrischen Hilfsbetrieben für den Betrieb des Schienenfahrzeugs, wobei elektrische Energie von zumindest zwei Verbrennungsmotor-Maschinen-Kombinationen in einen Gleichspannungs-Zwischenkreis eingespeist werden kann und wobei zumindest ein Traktionsmotor und für den Fahrbetrieb erforderliche Hilfsbetriebe mit elektrischer Energie aus dem Zwischenkreis zu versorgen sind, eine Lösung anzubieten, mit der bei einem Ausfall oder einer Abschaltung des Hilfsbetriebe-Wechselrichters der Fahrbetrieb fortgesetzt werden kann.

Die beigefügten Ansprüche definieren den Schutzumfang.

Die Erfindung geht zunächst von der Erkenntnis aus, dass es für den Ausfall der Stromversorgung der Hilfsbetriebe unterschiedliche Ursachen geben kann und abhängig davon, welche Ursache vorliegt, ein Weiterbetrieb des Gleichspannungs-Zwischenkreises und des zumindest einen Traktionsmotors möglich ist. Ferner stehen zumindest zwei Motor-Maschinen-Kombinationen zur Verfügung und wird daher vorgeschlagen, dass zumindest eine dieser Kombinationen während eines Notbetriebes für die elektrische Versorgung jedenfalls eines Teils der Hilfsbetriebe genutzt wird, insbesondere für diejenigen Hilfsbetriebe, die für den weiteren Fahrbetrieb erforderlich sind. Vorzugsweise wird die Kombination unmittelbar, ohne Zwischenschaltung des Gleichspannungs-Zwischenkreises für die Versorgung der Hilfsbetriebe mit elektrischer Energie genutzt. Insbesondere wird daher eine elektrische Notbetriebsleitung vorgesehen, über die die elektrische Maschine oder die elektrischen Maschinen der Kombination mit einem elektrischen Anschluss verbunden ist, über die im normalen Betrieb der Anordnung unter Zwischenschaltung des Hilfsbetriebe-Wechselrichters elektrische Energie aus dem Zwischenkreis zu den Hilfsbetrieben übertragen wird. Es ist alternativ möglich, die Notbetriebsleitung nicht über den auch im normalen Betrieb genutzten Hilfsbetriebe-Anschluss, sondern auf andere Weise an die Hilfsbetriebe anzuschließen. In jedem Fall können die Hilfsbetriebe durch die genannte, erste Verbrennungsmotor-Maschinen-Kombination mit elektrischer Energie versorgt werden, obwohl der Hilfsbetriebe-Wechselrichter nicht genutzt wird.

Mögliche Fehlerursachen, die aber einen Weiterbetrieb des Gleichspannungs-Zwischenkreises erlauben, sind zum Beispiel Ausfall der Steuerung des Hilfsbetriebe-Wechselrichters, Ausfall von elektronischen Schaltern des Hilfsbetriebe-Wechselrichters ohne Kurzschluss, Ausfall eines Transformators, über den der Hilfsbetriebe-Wechselrichter die Hilfsbetriebe mit Energie versorgt, und Kurzschluss von Frequenzfiltern, die in Kombination mit dem Hilfsbetriebe-Wechselrichter verwendet werden.

Da noch eine zweite Verbrennungsmotor-Maschinen-Kombination zur Verfügung steht (und optional weitere solche Kombinationen), kann während des Notbetriebes die elektrische Energieversorgung des zumindest einen Traktionsmotors mit Energie aus dem Zwischenkreis fortgesetzt werden. Dazu speist zumindest eine Kombination von ihrer elektrischen Maschine oder ihren elektrischen Maschinen erzeugte elektrische Energie in den Gleichspannungs-Zwischenkreis ein. Zwar ist ein Volllast-Traktionsbetrieb, für den alle vorhandenen Kombinationen elektrische Energie in den Zwischenkreis einspeisen müssen, während des Notbetriebes nicht möglich. Z.B. bei zwei gleichartigen Kombinationen steht jedoch zumindest 50 % der insgesamt vorhandenen elektrischen Leistung für die Traktion zur Verfügung. Jedoch ist es möglich, das Schienenfahrzeug weiter zu betreiben, um zumindest den nächsten Bahnhof oder eine Reparaturstation zu erreichen.

Die beigefügten Ansprüche enthalten: Eine Anordnung zum Versorgen von elektrischen Traktionsmotoren in einem Schienenfahrzeug und zum Versorgen von zusätzlichen elektrischen Hilfsbetrieben für den Betrieb des Schienenfahrzeugs mit elektrischer Energie, wobei die Anordnung aufweist:
- zumindest zwei Verbrennungsmotoren,
- für die zumindest zwei Verbrennungsmotoren jeweils eine zugeordnete elektrische Maschine zum Erzeugen der elektrischen Energie, wobei die elektrische Maschine mechanisch mit dem Verbrennungsmotor gekoppelt ist, sodass sie bei einem Generator-Betrieb der elektrischen Maschine von dem Verbrennungsmotor angetrieben wird, sodass zumindest eine erste und eine zweite Verbrennungsmotor-Maschinen-Kombination gebildet ist,
- zumindest einen Generator-Gleichrichter zum Gleichrichten von Wechselströmen, die von den elektrischen Maschinen während des Generator-Betriebes der jeweiligen elektrischen Maschine erzeugt werden,
- einen Gleichspannungs-Zwischenkreis, der über den zumindest einen Generator-Gleichrichter elektrisch mit den elektrischen Maschinen oder mit einem Teil der elektrischen Maschinen verbunden ist, wenn die elektrische Maschine oder die elektrischen Maschinen Energie in den Gleichspannungs-Zwischenkreis einspeist/einspeisen, und der elektrisch mit zumindest einem Traktionsmotor verbunden ist,
- einen Hilfsbetriebe-Wechselrichter mit einem Gleichspannungsanschluss und einem Wechselspannungsanschluss, der über den Gleichspannungsanschluss mit dem Gleichspannungs-Zwischenkreis und über den Wechselspannungsanschluss mit einem Hilfsbetriebe-Anschluss der Hilfsbetriebe verbunden ist, um die Hilfsbetriebe mit elektrischer Energie aus dem Gleichspannungs-Zwischenkreis zu versorgen,
- eine elektrische Notbetriebsleitung, über die die elektrische Maschine der ersten Verbrennungsmotor-Maschinen-Kombination während eines Notbetriebes, in dem der Hilfsbetriebe-Wechselrichter außer Betrieb ist, mit den Hilfsbetrieben verbunden ist, um die Hilfsbetriebe in dem Notbetrieb mit Energie zu versorgen.

Die elektrische Maschine der ersten Verbrennungsmotor-Maschinen-Kombination ist über den Generator-Gleichrichter oder über einen der Generator-Gleichrichter elektrisch mit dem Gleichspannungs-Zwischenkreis verbunden ist, wenn die elektrische Maschine der ersten Verbrennungsmotor-Maschinen-Kombination Energie in den Gleichspannungs-Zwischenkreis einspeist.

Zum Umfang der Erfindung gehört ferner ein Schienenfahrzeug, das die Anordnung in einer der zuvor oder später beschriebenen Ausführungsformen aufweist, wobei zumindest ein Traktionsmotor des Schienenfahrzeugs elektrisch an den Gleichspannungs-Zwischenkreis angeschlossen ist und zusätzliche elektrische Hilfsbetriebe des Schienenfahrzeugs an die Notbetriebsleitung der Anordnung angeschlossen oder anschließbar sind.

Ferner gehört zum Gegenstand der Ansprüche: Eine Verwendung einer Anordnung mit zumindest einer ersten und einer zweiten Verbrennungsmotor-Maschinen-Kombination, zumindest einem Generator-Gleichrichter, einem Gleichspannungs-Zwischenkreis und einer elektrischen Notbetriebsleitung zum Versorgen von elektrischen Traktionsmotoren in einem Schienenfahrzeug und zum Versorgen von zusätzlichen elektrischen Hilfsbetrieben für den Betrieb des Schienenfahrzeugs mit elektrischer Energie, wobei:
- zumindest zwei Verbrennungsmotoren jeweils in Kombination mit einer zugeordneten elektrischen Maschine betrieben werden, sodass zumindest eine erste und eine zweite Verbrennungsmotor-Maschinen-Kombination betrieben werden,
- die elektrischen Maschinen während eines Generator-Betriebes der jeweiligen elektrischen Maschine angetrieben durch den Verbrennungsmotor Wechselstrom erzeugen, der in einem ersten Betriebszustand über zumindest einen Generator-Gleichrichter gleichgerichtet und als Gleichstrom in einen Gleichspannungs-Zwischenkreis eingespeist wird,
- aus dem Gleichspannungs-Zwischenkreis elektrische Energie zu zumindest einem Traktionsmotor des Schienenfahrzeugs geliefert wird,
- in dem ersten Betriebszustand elektrische Energie aus dem Gleichspannungs-Zwischenkreis entnommen und über einen Hilfsbetriebe-Wechselrichter sowie über einen Hilfsbetriebe-Anschluss an die Hilfsbetriebe geliefert wird,
- in einem zweiten Betriebszustand, in dem der Hilfsbetriebe-Wechselrichter außer Betrieb ist und der ein Notbetriebszustand ist, elektrische Energie von der elektrischen Maschine der ersten Verbrennungsmotor-Maschinen-Kombination über eine elektrische Notbetriebsleitung, und insbesondere über den Hilfsbetriebe-Anschluss, zu den Hilfsbetrieben geliefert wird.

Außerdem gehört zum Gegenstand der Ansprüche: Ein Verfahren zur Herstellung einer Anordnung zum Versorgen von elektrischen Traktionsmotoren in einem Schienenfahrzeug und zum Versorgen von zusätzlichen elektrischen Hilfsbetrieben für den Betrieb des Schienenfahrzeugs mit elektrischer Energie, wobei:
- zumindest zwei Verbrennungsmotoren bereitgestellt werden,
- für die zumindest zwei Verbrennungsmotoren jeweils eine zugeordnete elektrische Maschine zum Erzeugen der elektrischen Energie bereitgestellt wird und derart mechanisch mit dem Verbrennungsmotor gekoppelt wird, dass sie bei einem Generator-Betrieb der elektrischen Maschine von dem Verbrennungsmotor angetrieben wird, sodass zumindest eine erste und eine zweite Verbrennungsmotor-Maschinen-Kombination gebildet wird,
- die elektrischen Maschinen über zumindest einen Generator-Gleichrichter zum Gleichrichten von Wechselströmen elektrisch mit einem Gleichspannungs-Zwischenkreis verbunden werden,
- an dem Gleichspannungs-Zwischenkreis ein elektrischer Traktions-Anschluss zum Anschließen zumindest eines Traktionsmotors vorgesehen wird,
- ein Hilfsbetriebe-Wechselrichter bereitgestellt wird und ein Gleichspannungsanschluss des Hilfsbetriebe-Wechselrichters mit dem Gleichspannungs-Zwischenkreis und ein Wechselspannungsanschluss des Hilfsbetriebe-Wechselrichters mit einem Hilfsbetriebe-Anschluss zum Anschließen der Hilfsbetriebe verbunden werden,
- die elektrische Maschine der ersten Verbrennungsmotor-Maschinen-Kombination über eine elektrische Notbetriebsleitung elektrisch mit einer elektrischen Versorgungsleitung der Hilfsbetriebe verbunden wird, wobei die durch die elektrische Notbetriebsleitung vorgesehene elektrische Verbindung durch zumindest einen Notbetriebsschalter einschaltbar ist, um einen Notbetrieb der Hilfsbetriebe ohne den Hilfsbetriebe-Wechselrichter zu ermöglichen, und die elektrische Verbindung andernfalls (insbesondere während des normalen Betriebes, wenn der Hilfsbetriebe-Wechselrichter betrieben wird) ausschaltbar ist.

In der Praxis wird eine Verbrennungsmotor-Maschinen-Kombination in der Regel einen einzigen Verbrennungsmotor und eine einzige elektrische Maschine aufweisen, die mit dem Verbrennungsmotor mechanisch gekoppelt ist. Es ist jedoch nicht ausgeschlossen, dass mehr als eine elektrische Maschine in der Kombination vorhanden ist und z.B. durch denselben Verbrennungsmotor angetrieben wird. Ferner ist es auch nicht ausgeschlossen, dass die Kombination mehr als einen Verbrennungsmotor aufweist, wobei die Verbrennungsmotoren eine oder mehrere elektrische Maschinen gemeinsam antreiben.

Während des so genannten Generator-Betriebes erzeugt die elektrische Maschine oder erzeugen sämtliche elektrische Maschinen der jeweiligen Kombination elektrische Energie.

Im Normalbetrieb, wenn die Hilfsbetriebe über den Hilfsbetriebe-Wechselrichter mit elektrischer Energie aus dem Zwischenkreis versorgt werden, speisen sämtliche elektrischen Maschinen, die zu einem gegebenen Zeitpunkt als Generator betrieben werden, die von ihnen erzeugte elektrische Energie vorzugsweise in den Gleichspannungs-Zwischenkreis ein. Wie oben bereits erwähnt, ist es jedoch möglich, dass zumindest eine der Kombinationen keine oder keine nennenswerte elektrische Leistung erzeugt, sondern z.B. der Verbrennungsmotor von der elektrischen Maschine im Leerlaufbetrieb bewegt wird.

Insbesondere kann für die elektrischen Maschinen jeweils ein Maschinen-Stromrichter vorgesehen sein, wobei ein Wechselspannungsanschluss des Maschinen-Stromrichters mit der elektrischen Maschine verbunden ist, um die elektrische Maschine während eines Motor-Betriebes der elektrischen Maschine als Motor zu betreiben. Die elektrischen Maschinen werden während des Motor-Betriebes der jeweiligen elektrischen Maschine, in dem die elektrische Maschine den mit ihr kombinierten Verbrennungsmotor antreibt, von jeweils einem Maschinen-Stromrichter mit elektrischer Energie versorgt. Bei der Herstellung der Anordnung wird für die elektrischen Maschinen jeweils ein Maschinen-Stromrichter bereitgestellt und wird ein Wechselspannungsanschluss des Maschinen-Stromrichters mit der elektrischen Maschine verbunden, um die elektrische Maschine während eines Motor-Betriebes der elektrischen Maschine als Motor zu betreiben.

Es wird bevorzugt, dass jede der Kombinationen über einen zugeordneten Generator-Gleichrichter zum Gleichrichten von Wechselströmen, die von den elektrischen Maschinen während des Generator-Betriebes der elektrischen Maschine oder der elektrischen Maschinen der Kombination erzeugt werden, mit dem Gleichspannungs-Zwischenkreis verbunden sind. Insbesondere wenn zumindest eine der Kombinationen über einen elektrischen Schalter mit einem Generator-Gleichrichter verbunden ist, können bei einer anderen Gestaltung mehrere Kombinationen denselben Generator-Gleichrichter gemeinsam nutzen. Soll eine der Kombinationen keine elektrische Energie in den Zwischenkreis einspeisen, wird der Schalter geöffnet. Der Gleichspannungs-Zwischenkreis ist daher über den zumindest einen Generator-Gleichrichter elektrisch mit den elektrischen Maschinen oder mit einem Teil der elektrischen Maschinen verbunden, wenn die elektrische Maschine oder elektrischen Maschinen Energie in den Gleichspannungs-Zwischenkreis einspeisen. Ferner ist der Zwischenkreis elektrisch mit zumindest einem Traktionsmotor verbunden, z.B. über einen Traktions-Wechselrichter. Wie erwähnt, und dies gilt nicht nur für den Fall, dass mehrere Kombinationen einen gemeinsamen Generator-Gleichrichter nutzen, kann die Kombination über einen elektrischen Schalter mit dem Gleichspannungs-Zwischenkreis verbunden sein und kann dieser Schalter geöffnet werden, wenn die Kombination keine elektrische Energie in den Zwischenkreis einspeist.

Es ist ein Hilfsbetriebe-Wechselrichter vorhanden, bei dem es sich optional auch um ein verteiltes System handeln kann, d.h. elektrisch voneinander getrennte und z.B. lediglich über den Gleichspannungs-Zwischenkreis elektrisch miteinander verbundene Wechselrichter-Einheiten können während des Betriebes jeweils Wechselstrom erzeugen, der für den Betrieb der Hilfsbetriebe nutzbar ist. Die verschiedenen Wechselrichter-Einheiten können eine gemeinsame Steuerung aufweisen.

Die Erfindung betrifft auch den Fall, dass der Gleichspannungs-Zwischenkreis ein verteiltes System ist, bei dem zumindest zwei Gleichspannungs-Teilkreise jeweils mit einem hohen und einem niedrigen elektrischen Potential vorhanden sind und z.B. ein Traktionswechselrichter an dem einen Teilkreis angeschlossen ist und der Hilfsbetriebe-Wechselrichter oder eine Wechselrichter-Einheit an einem zweiten Teilkreis angeschlossen ist. Optional können die Teilkreise elektrisch miteinander gekoppelt sein, z.B. über elektrische Schalter, die die beiden hohen Potentiale und die beiden niedrigen Potentiale verbinden. Entsprechend können die verschiedenen Verbrennungsmotor-Maschinen-Kombinationen entweder ausschließlich an einen der Teilkreise oder parallel an mehr als einen der Teilkreise angeschlossen sein.

Für jede der Kombinationen, und somit separat für die elektrische Maschine oder die elektrischen Maschinen der Kombination, ist vorzugsweise jeweils ein Maschinen-Stromrichter vorgesehen. Wenn eine Kombination über mehr als eine elektrische Maschine verfügt, kann derselbe Maschinen-Stromrichter die Mehrzahl der elektrischen Maschinen im Motor-Betrieb betreiben. Ein Sonderfall des Motor-Betriebes ist der Start der Kombination, wobei der zumindest eine Maschinen-Stromrichter, der der Kombination zugeordnet ist, die zumindest eine elektrische Maschine der Kombination oder wenigstens eine elektrische Maschine der Kombination mit elektrischer Energie versorgt, sodass die zumindest eine elektrische Maschine den Verbrennungsmotor oder die Verbrennungsmotoren der Kombination startet. Es ist jedoch alternativ möglich, dass zumindest eine der Kombinationen über einen zusätzlichen Starter verfügt, mit dem der Verbrennungsmotor gestartet wird. In diesem Fall kann der Maschinen-Stromrichter entfallen.

Wenn noch keine der Kombinationen, die in einem gegebenen Betriebszustand der Anordnung mit dem Gleichspannungs-Zwischenkreis elektrisch verbunden ist, gestartet ist, reicht die aus dem Gleichspannungs-Zwischenkreis entnehmbare elektrische Energie in der Regel nicht aus, um wenigstens eine Kombination zu starten, d.h. die elektrische Kapazität des Zwischenkreises, einschließlich in der Regel vorhandener Kondensatoren, ist nicht ausreichend. Es ist daher wie üblich zumindest ein zusätzlicher Energiespeicher vorhanden, z.B. ein elektrochemischer Energiespeicher, aus dem die Energie für den Start zumindest einer Kombination entnommen wird. Es wird aber bevorzugt, die weitere Kombination oder die weiteren Kombinationen mit Energie aus dem Zwischenkreis zu starten, sobald ausreichend Energie von einer bereits gestarteten Kombination in den Zwischenkreis eingespeist worden ist. Es gibt daher mehrere Möglichkeiten, wie die Maschinen-Stromrichter oder zusätzliche Starter mit elektrischer Energie versorgt werden. Bei den Maschinen-Stromrichtern handelt es sich insbesondere um Maschinen-Wechselrichter, deren Wechselspannungsseite mit der elektrischen Maschine oder den elektrischen Maschinen der zugeordneten Kombination verbunden ist und deren Gleichspannungsseite z.B. mit dem zusätzlichen Energiespeicher verbunden ist und/oder über einen weiteren elektrischen Konverter mit dem Gleichspannungs-Zwischenkreis verbunden ist. Bei dem weiteren elektrischen Konverter handelt es sich z.B. um einen Gleichrichter, der wiederum mit der Wechselspannungsseite des Hilfsbetriebe-Wechselrichters verbunden ist. Ferner kann optional ein Spannungswandler vorgesehen sein (z.B. ein Transformator), über den die Wechselspannungsseite (d.h. der Wechselspannungsanschluss) des Hilfsbetriebe-Wechselrichters mit dem zusätzlichen elektrischen Konverter (insbesondere dem Gleichrichter) verbunden ist. Durch den Spannungswandler kann somit ein für die elektrische Versorgung des oder der Maschinen-Stromrichter oder Starters geeignete Spannungsniveau erreicht werden.

Zumindest einer der Generator-Gleichrichter, der einer der Kombinationen zugeordnet ist und der vorzugsweise ausschließlich dieser bestimmten Kombination zugeordnet ist, kann identisch mit dem Maschinen-Stromrichter der Kombination sein. In diesem Fall weist der Stromrichter einen Wechselspannungsanschluss auf, der mit der zumindest einen elektrischen Maschine der Kombination verbunden ist, und weist einen Gleichspannungsanschluss auf, der mit dem Zwischenkreis verbunden ist. Wenn die zumindest eine elektrische Maschine elektrische Energie erzeugt, arbeitet der Stromrichter als Generator-Gleichrichter. Wenn für den Motor-Betrieb der zumindest einen elektrischen Maschine der Kombination elektrische Energie aus dem Zwischenkreis entnommen wird, arbeitet der Stromrichter als Maschinen-Wechselrichter. Insbesondere kann der Stromrichter mit dem bereits genannten zusätzlichen Energiespeicher (z.B. Fahrzeugbatterie) elektrisch verbunden sein oder verbunden werden (z.B. über zumindest einen elektrischen Schalter, der geschlossen wird, um den Stromrichter zu verbinden). Daher kann für den Motor-Betrieb der zumindest einen elektrischen Maschine der Kombination (alternativ zu der Entnahme von elektrischer Energie aus dem Zwischenkreis) Energie aus dem zusätzlichen Energiespeicher entnommen werden. Es ist sogar möglich, dass in dem Motor-Betrieb Energie immer ausschließlich aus dem zusätzlichen Energiespeicher entnommen wird und Energie niemals für den Motor-Betrieb aus dem Zwischenkreis entnommen wird. In diesem Fall befindet sich z.B. zwischen dem Stromrichter und dem Zwischenkreis ein Trennschalter. Bevorzugt wird jedoch die Entnahme von Energie aus dem Zwischenkreis, soweit dies in einer momentanen Betriebssituation möglich ist.

Bevorzugt wird jedoch, dass der Generator-Gleichrichter und der Maschinen-Stromrichter verschiedene Einrichtungen sind.

Varianten des oben genannten Betriebsverfahrens und Varianten des oben genannten Herstellungsverfahrens folgen aus der Beschreibung von Varianten der Anordnung und des Schienenfahrzeugs. Wenn z.B. ein zusätzliches elektrisches Bauteil und/oder eine zusätzliche elektrische Verbindung der Anordnung beschrieben wird, entspricht dem ein Verfahrensschritt des Herstellungsverfahrens, in dem dieses Bauteil und/oder diese Verbindung vorgesehen wird. Bezüglich des Betriebsverfahrens entspricht dem der Betrieb des Bauteils und/oder der Verbindung. Insbesondere kann die Anordnung eine Steuerungsanordnung mit Steuereinheiten aufweisen, die ausgestaltet ist, die steuerbaren Schalter und Konverter der Anordnung so zu steuern, dass das Betriebsverfahren ausführbar ist. Z. B. kann zu Beginn des Notbetriebes eine Steuereinheit den Notbetriebsschalter einschalten (d.h. schließen) und eine Steuereinheit den Schalter zwischen der ersten Kombination und dem Generator-Gleichrichter oder zwischen dem Generator-Gleichrichter und dem Zwischenkreis öffnen. Weitere Steuereinheiten sind insbesondere für jeden der Stromrichter (Generator-Gleichrichter, Maschinen-Stromrichter, Hilfsbetriebe-Wechselrichter) vorhanden. Vorzugsweise sind die Steuereinheiten miteinander und/oder mit einer übergeordneten Steuereinheit steuerungstechnisch verbunden.

Auf mögliche Betriebsweisen der zumindest zwei Verbrennungsmotor-Maschinen-Kombinationen wurde oben bereits eingegangen. Insbesondere ermöglichen zumindest zwei Kombinationen einen Teillastbetrieb des Schienenfahrzeugs, auch wenn kein Notbetrieb z.B. wegen ausgefallenem Hilfsbetriebe-Wechselrichter stattfindet. Kein Notbetrieb bedeutet, dass sich die Anordnung bzw. das Schienenfahrzeug in dem ersten Betriebszustand befindet, in dem elektrische Energie von zumindest einer der Kombinationen über den zumindest einen Generator-Gleichrichter in den Zwischenkreis eingespeist wird und elektrische Energie aus dem Zwischenkreis entnommen und über den Hilfsbetriebe-Wechselrichter an die Hilfsbetriebe geliefert wird.

Auch in dem zweiten Betriebszustand, dem Notbetriebszustand, kann elektrische Energie von zumindest einer Kombination über den zumindest einen Generator-Gleichrichter in den Zwischenkreis eingespeist werden, z. B. für Traktionsmotoren. In diesem zweiten Betriebszustand gibt es jedoch zumindest eine Kombination, die die Hilfsbetriebe direkt über die Notbetriebsleitung mit elektrischer Energie versorgt. Daher können trotz z.B. ausgefallenem Hilfsbetriebe-Wechselrichter sowohl zumindest ein Traktionsmotor als auch die für den Fahrbetrieb erforderlichen Hilfsbetriebe mit elektrischer Energie versorgt werden.

Beim Übergang von dem ersten Betriebszustand zu dem zweiten Betriebszustand wird insbesondere ein Notbetriebsschalter eingeschaltet, wodurch die elektrische Verbindung der zumindest einen elektrischen Maschine der ersten Kombination zu den Hilfsbetrieben hergestellt wird, die über die Notbetriebsleitung führt. Wenn dagegen in dem ersten Betriebszustand der Notbetriebsschalter ausgeschaltet ist, existiert zwar die elektrische Notbetriebsleitung, die durch sie herstellbare elektrische Verbindung ist aber durch den Notbetriebsschalter unterbrochen. Der Notbetriebsschalter kann im Verlauf der Notbetriebsleitung angeordnet sein oder an einem Ende der Notbetriebsleitung. Es können auch mehr als ein Notbetriebsschalter vorgesehen sein.

Bevorzugtermaßen besteht die elektrische Verbindung der Notbetriebsleitung in dem zweiten Betriebszustand, d.h. während des Notbetriebes, von der zumindest einen elektrischen Maschine der ersten Kombination zu dem Hilfsbetriebe-Anschluss, über den auch während des ersten Betriebszustandes elektrische Energie zu den Hilfsbetrieben geliefert wird. In diesem Fall wird es bevorzugt, dass zwischen dem Wechselspannungsanschluss des Hilfsbetriebe-Wechselrichters und dem Hilfsbetriebe-Anschluss ein Trennschalter angeordnet ist bzw. wird, durch den der Hilfsbetriebe-Wechselrichter für den Notbetrieb von dem Hilfsbetriebe-Anschluss trennbar ist. Beim Übergang von dem ersten in den zweiten Betriebszustand wird daher vorzugsweise dieser Trennschalter geöffnet, sodass der Wechselspannungsanschluss des Hilfsbetriebe-Wechselrichters von dem Hilfsbetriebe-Anschluss getrennt ist und die elektrische Energie direkt über die Notbetriebsleitung und den Hilfsbetriebe-Anschluss zu den Hilfsbetrieben übertragen werden kann.

Ausführungsbeispiele der Erfindung werden nun unter Bezugnahme auf die beigefügte Zeichnung beschrieben. Die einzelnen Figuren der Zeichnung zeigen:
- Fig. 1: eine erste Ausführungsform einer Anordnung zum Versorgen von zumindest einem Traktionsmotor und zusätzlichen elektrischen Hilfsbetrieben in einem Schienenfahrzeug mit elektrischer Energie und
- Fig. 2: eine zweite Ausführungsform einer Anordnung zum Versorgen von zumindest einem Traktionsmotor und zusätzlichen elektrischen Hilfsbetrieben in einem Schienenfahrzeug mit elektrischer Energie.

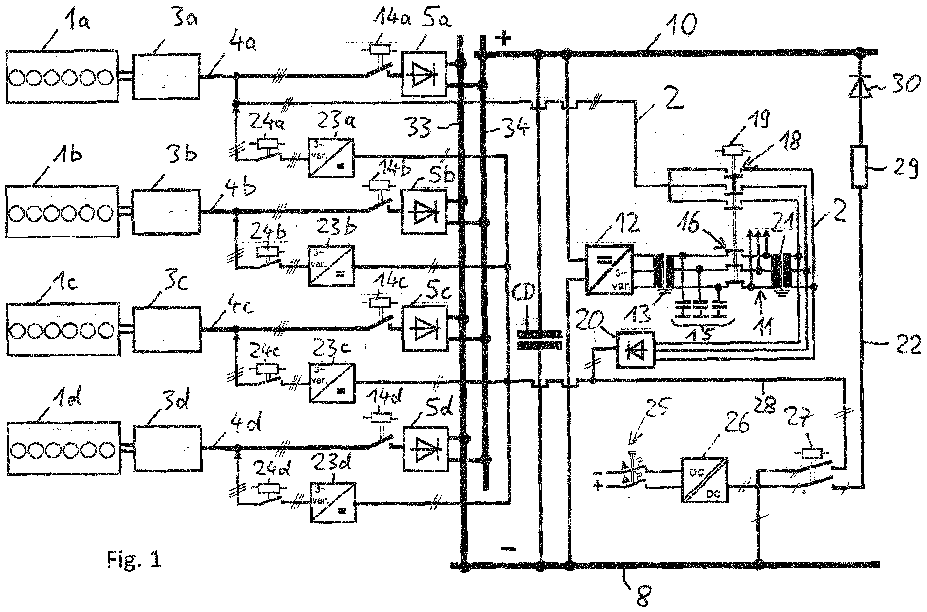

Das in Fig. 1 dargestellte Ausführungsbeispiel weist vier Verbrennungsmotor-Maschinen-Kombinationen 1, 3 auf, wobei die Verbrennungsmotoren 1 a, 1 b, 1 c, 1 d vorzugsweise Dieselmotoren sind. Bei den elektrischen Maschinen 3a, 3b, 3c, 3d handelt es sich z.B. um Permanentmagnet-Synchronmotoren.

Jede der Kombinationen 1, 3 ist über eine dreiphasige Anschlussleitung 4a, 4b, 4c, 4d mit einem der Kombination 1, 3 zugeordneten Generator-Gleichrichter 5a, 5b, 5c, 5d verbunden. Dabei führt die dreiphasige Anschlussleitung 4 jeder der Kombinationen über einen dreiphasigen Trennschalter 14a, 14b, 14c, 14d und somit kann die dreiphasige elektrische Verbindung zwischen der elektrischen Maschine 3 und dem Generator-Gleichrichter 5 unterbrochen werden, insbesondere wenn die elektrische Maschine 3 der Kombination 1, 3 als Motor betrieben wird. Die Gleichrichter 5 sind über Verbindungsleitungen 33, 34, die als Sammelleitungen für alle Gleichrichter 5 ausgestaltet sind, an den Gleichspannungs-Zwischenkreis mit den Leitungen 8, 10 verbunden.

Ein Hilfsbetriebe-Wechselrichter 12 ist mit seinen beiden gleichspannungsseitigen Anschlussleitungen an die Leitungen 8, 10 des Zwischenkreises angeschlossen. Mit seiner dreiphasigen Wechselspannungsseite ist der Hilfsbetriebe-Wechselrichter 12 über einen Trenn-Transformator 13 und eine Filteranordnung 15, die z.B. als Sinus-Filter ausgestaltet ist, sowie über einen Schalter 16 mit einem Hilfsbetriebe-Anschluss 11 verbunden. In Fig. 1 sind die elektrischen Verbindungen von dem Hilfsbetriebe-Anschluss 11 zu den hier nicht dargestellten Hilfsbetrieben durch drei nach oben weisende Pfeile dargestellt, die parallel zueinander verlaufen.

Ferner ist der Hilfsbetriebe-Anschluss 11 über einen weiteren Transformator 21 mit der Wechselspannungsseite eines Gleichrichters 20 und mit einer dreiphasigen Notbetriebsleitung 2 verbunden, die über einen Trennschalter 18 zu der dreiphasigen Anschlussleitung 4a der ersten Kombination 1 a, 3a führt. Zumindest einer der Transformatoren 13, 21 kann weggelassen werden oder durch einen anderen Spannungswandler ersetzt werden. Ein Transformator oder Spannungswandler zwischen dem Hilfsbetriebe-Wechselrichter 12 und dem Hilfsbetriebe-Anschluss 11 hat den Vorteil, dass zusätzlich zu dem Hilfsbetriebe-Wechselrichter 12 eine Anpassung der Spannung an das für die Hilfsbetriebe erforderliche Spannungsniveau stattfinden kann. Insbesondere ein Transformator 13 bewirkt außerdem eine galvanische Trennung. Der weitere Transformator 21 ermöglicht sowohl im Notbetrieb als auch bei Versorgung der elektrischen Maschinen 3 mit Energie aus dem Gleichspannungs-Zwischenkreis für deren Motorbetrieb ebenfalls zu einer Spannungsanpassung, die wie erwähnt auch durch einen anderen Spannungswandler erreicht werden kann. Für diese Energieversorgung aus dem Zwischenkreis ist der bereits erwähnte Gleichrichter 20 mit Gleichspannungsanschlüssen von Maschinen-Wechselrichtern 23a, 23b, 23c, 23d verbunden. Die Wechselspannungsseiten der Maschinen-Wechselrichter 23 sind jeweils über einen Schalter 24a, 24b, 24c, 24d mit der dreiphasigen Anschlussleitung 4 der Kombination verbunden.

Die Ankopplung der Notbetriebsleitung 2 über den weiteren Transformator 21 bzw. über einen Spannungswandler, wobei der Gleichrichter 20 für die Versorgung der Maschinen-Wechselrichter ebenfalls mit seiner Wechselspannungsseite über den Spannungswandler mit dem Hilfsbetriebe-Anschluss 11 verbunden ist, hat den Vorteil, dass mit einem einzigen Spannungswandler eine Anpassung des Spannungsniveaus stattfinden kann und die Spannung an dem Hilfsbetriebe-Anschluss 11 insbesondere niedriger liegen kann als in der Notbetriebsleitung und für die Versorgung der Maschinen-Wechselrichter. Eine solche Lösung wird daher ganz allgemein, unabhängig von dem Ausführungsbeispiel der Fig. 1, bevorzugt.

Vorzugsweise, wie in Fig. 1 dargestellt, werden der dreipolige Schalter 16 zwischen der Wechselspannungsseite des Hilfsbetriebe-Wechselrichters 12 und dem Hilfsbetriebe-Anschluss 11 sowie der Trennschalter 18 in der Notbetriebsleitung 2 von einer gemeinsamen Steuerung 19 betätigt. Beim Übergang von dem Normalbetrieb, in dem die Hilfsbetriebe über den Hilfsbetriebe-Wechselrichter 12 mit elektrischer Energie aus dem Zwischenkreis 8, 10 versorgt werden, in den Notbetrieb, in dem die Hilfsbetriebe über die Notbetriebsleitung 2 versorgt werden, steuert die Steuerung 19 die Schalter 16, 18 so an, dass der Schalter 16 geöffnet wird und der Trennschalter 18 geschlossen wird. Im Normalbetrieb speist daher zumindest eine der Kombinationen 1, 3 von ihrer elektrischen Maschine 3 erzeugte elektrische Energie über die dreiphasige Anschlussleitung 4 und den Generator-Gleichrichter 5 in den Zwischenkreis 8, 10 ein, wobei diese Energie über den Hilfsbetriebe-Wechselrichter 12 den Hilfsbetrieben zur Verfügung steht und auch über zumindest einen nicht dargestellten Traktions-Wechselrichter zumindest einem Traktionsmotor des Schienenfahrzeugs zur Verfügung steht. Im Notbetrieb dagegen speist in der Ausführungsform der Fig. 1 die elektrische Maschine 3a der ersten Kombination 1, 3 von ihr erzeugte elektrische Energie über die Notbetriebsleitung 2 und den optional vorhandenen Spannungswandler 21 in die entsprechenden Verbindungsleitungen zu den Hilfsbetrieben ein. Gleichzeitig kann zumindest eine weitere Kombination 1 b, 3b; 1 c, 3c, 1 d, 3d mit ihrer elektrischen Maschine 3 elektrische Energie erzeugen und über die dreiphasige Anschlussleitung 4b, 4c, 4d und den Generator-Gleichrichter 5b, 5c, 5d in den Zwischenkreis 8, 10 einspeisen. Diese Energie steht dann ähnlich wie im Normalbetrieb insbesondere zumindest einem Traktionsmotor zur Verfügung. Optional kann sowohl im Normalbetrieb als auch im Notbetrieb Energie aus dem Zwischenkreis 8, 10 für weitere Anwendungen entnommen werden, z.B. für nicht für den Fahrbetrieb zwingend erforderliche elektrische Einrichtungen, die z.B. im Fall eines Zuges über die Zugsammelschiene angeschlossen sind.

In üblicher Weise ist eine Kapazität CD zwischen die Leitungen 8, 10 des Zwischenkreises geschaltet, um Schwankungen der Gleichspannung auszugleichen und/oder Energie aufzunehmen.

Ferner ist mit der Gleichspannungsseite des Gleichrichters 20 für die Versorgung der Maschinen-Wechselrichter 23 eine weitere elektrische Leitung 28 verbunden, die insbesondere zweipolig ausgeführt ist und es erlaubt, über einen Schalter 27 und einen Spannungswandler 26 sowie über einen optionalen Schutzschalter 25 Energie aus einem nicht dargestellten elektrischen Energiespeicher (z.B. Fahrzeugbatterie) zu entnehmen. Der Betrieb zumindest eines der Maschinen-Wechselrichter 23 ist daher auch mit Energie aus dem zusätzlichen Energiespeicher möglich. Insbesondere im Notbetrieb, wenn noch keiner der Verbrennungsmotoren 1 gestartet ist, wird auf diese Weise Energie aus dem zusätzlichen Energiespeicher entnommen und für den Start zumindest einer Kombination 1, 3 genutzt. Z.B. wird zunächst die Kombination 1 b, 3b gestartet, dann deren elektrische Maschine 3b als Generator betrieben und die erzeugte elektrische Energie über den Generator-Gleichrichter 5b in den Zwischenkreis 8, 10 eingespeist. Sie steht somit für den Betrieb zumindest eines Traktionsmotors und optional weiterer Verbraucher aus dem Zwischenkreis zur Verfügung.

Alternativ kann zunächst die Kombination 1 a, 3a gestartet werden, indem entsprechend Energie aus dem zusätzlichen Energiespeicher entnommen und über die Leitung 28 ihrem Maschinen-Wechselrichter 23 zugeführt wird. Nach dem Startvorgang kann die elektrische Maschine 3a als Generator betrieben werden und ihre elektrische Energie über die Notbetriebsleitung 2 bereitstellen. Diese Energie kann nun über den Gleichrichter 20 für den Start weiterer Kombinationen 1, 3 genutzt werden.

Bei einer im Vergleich zu Fig. 1 alternativen Ausgestaltung kann die für den Startvorgang einer Kombination erforderliche elektrische Energie unmittelbar aus dem Gleichspannungs-Zwischenkreis dem Maschinen-Wechselrichter der Kombination zugeführt werden, sobald eine der Kombinationen bereits gestartet ist, die Energie in den Zwischenkreis einspeist. Diese Betriebsweise ist z.B. bei der im Folgenden beschriebenen Ausführungsform möglich.

Der Spannungswandler 26 ist außerdem über eine elektrische Leitung mit der Leitung 10 auf dem höheren elektrischen Potenzial des Zwischenkreises verbunden, und zwar über einen Widerstand 29 und eine Diode 30. Die Leitung 22 ist durch den Schalter 27 von dem Spannungswandler 26 trennbar. Über die Leitung 22 kann der Gleichspannungs-Zwischenkreis vorgeladen werden, d.h. es kann eine entsprechende elektrische Spannung zwischen der Leitung 10 und der Leitung 8 erzeugt werden. Dadurch werden beim Zuschalten der Generatoren 3 durch Schließen der Schalter 14 Kurzschlussströme vermieden.

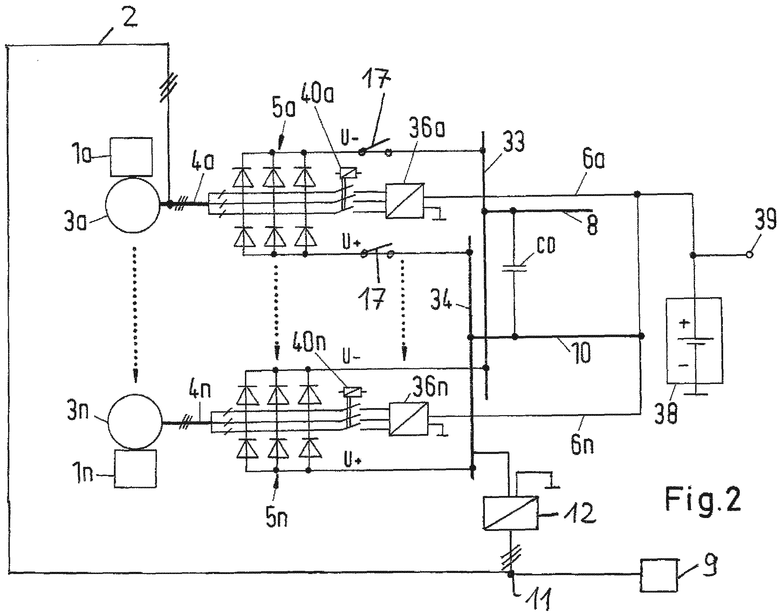

Fig. 2 zeigt eine Anordnung ähnlich der in Fig. 1. Es sind Details von einzelnen Komponenten der Anordnung dargestellt. Gleiche Bezugszeichen, insbesondere gleiche Zahlen, bezeichnen gleiche oder entsprechende Komponenten wie in Fig. 1.
Insbesondere können zusätzliche, nicht in Fig. 2 gezeigte Merkmale der Anordnung aus Fig. 1 auch bei der Anordnung vorhanden sein, z. B. der Trennschalter zwischen dem Wechselspannungsanschluss des Hilfsbetriebe-Wechselrichters und dem Hilfsbetriebe-Anschluss.

Es sind in der Anordnung n Kombinationen mit jeweils einem Verbrennungsmotor 1a...1n und einem mechanisch damit gekoppelten Generator 3a...3n vorhanden, wobei n eine positive ganze Zahl ist. In der Praxis kommen z.B. zwei oder vier solche Kombinationen in einer Lokomotive oder einem anderen Schienenfahrzeug vor.

Jede der Kombinationen 1, 3 ist über eine dreiphasige Anschlussleitung 4a...4n mit einem Generator-Gleichrichter 5a...5n verbunden. In dem Ausführungsbeispiel sind die Gleichrichter 5 ungesteuerte dreiphasige Brückenschaltungen. Die unterschiedlichen Potentiale auf der Gleichspannungsseite der Gleichrichter 5 sind mit U+ bzw. U- bezeichnet. Die Gleichrichter 5 sind über Verbindungsleitungen 33, 34, die als Sammelleitungen für alle Gleichrichter 5 ausgestaltet sind, an den Gleichspannungs-Zwischenkreis mit den Leitungen 8, 10 verbunden.

Alternativ könnten mehrere Gleichspannungs-Zwischenkreise vorgesehen sein, aus denen jeweils zumindest ein Traktionsmotor mit elektrischer Energie versorgt wird. In diesem Fall ist aber zumindest ein Zwischenkreis vorhanden, an den der Hilfsbetriebe-Wechselrichter angeschlossen ist.

In der Ausführungsform der Fig. 2 ist das eine Potential, nämlich das höhere Potential U+ (Leitung 10) des Zwischenkreises über jeweils eine weitere Verbindungsleitung 6a...6n mit einem Maschinen-Wechselrichter 36a...36n der jeweiligen Kombination 1, 3 elektrisch verbunden. Das andere, niedrigere Potential U- des Zwischenkreises (Leitung 8) ist beispielsweise mit Fahrzeugmasse verbunden. Ferner ist in dem Ausführungsbeispiel ein Fahrzeug-Energiespeicher 38 (z. B. eine elektrochemischer Speicher) zur Speicherung elektrischer Energie z. B. über einen DC/DC-Konverter (nicht gezeigt) mit der Leitung 10 des Zwischenkreises verbunden. Über einen Anschluss 39 kann der Energiespeicher 38 und/oder der Zwischenkreis zusätzlich geladen werden, z.B. über ein so genanntes Batterie-Ladegerät, welches auch der DC/DC-Konverter sein kann.

Die Maschinen-Wechselrichter 36 sind über eine dreiphasige Leitung und ein Trenn-Schütz 40a...40n mit der dreiphasigen Leitung 4a...4n verbunden.

In einer alternativen Ausgestaltung kann statt der ungesteuerten Gleichrichterbrücke und dem Generator-Wechselrichter ein Konverter vorgesehen sein, der sowohl als Gleichrichter (bei Generator-Betrieb der elektrischen Maschine 3) als auch als Wechselrichter (bei Motor-Betrieb der elektrischen Maschine 3) betreibbar ist. Die in Fig. 2 dargestellte Ausführungsform mit separater Gleichrichterbrücke und Generator-Wechselrichter hat den Vorteil, dass der Maschinen-Wechselrichter für die Übertragung kleinerer elektrischer Spannungen und Leistungen ausgelegt werden kann als die Gleichrichterbrücke, da im Motor-Betrieb der elektrischen Maschine 3 nur geringe Leistungen erforderlich sind, um den Verbrennungsmotor bei Lehrlaufdrehzahlen betreiben zu können. Ein gesteuerter oder geregelter integrierter Konverter für sowohl das Gleichrichten als auch das Wechselrichten müsste aber für große Leistungen bei Traktionsbetrieb ausgelegt sein.

Zumindest eine der Kombinationen, nämlich in dem Ausführungsbeispiel die Kombination 1a, 3a, ist über einen Schalter 17 von dem Zwischenkreis 8, 10 trennbar. In dem Ausführungsbeispiel der Fig. 2 ist der Schalter 17 zwischen der Gleichspannungsseite des Gleichrichters 5a und den Verbindungsleitungen 33, 34 angeordnet. Er ist zweipolig ausgeführt. Alternativ kann er entsprechend dem Beispiel in Fig. 1 in der dreiphasigen Anschlussleitung 4a angeordnet sein und somit dreipolig ausgeführt sein. Durch Öffnen des Schalters 17 wird in jedem Fall die Kombination von dem Zwischenkreis getrennt und kann die Kombination 1a, 3a über die Notbetriebsleitung 2 die Hilfsbetriebe 9 mit elektrischer Energie versorgen. In dem Beispiel der Fig. 2 ist die Notbetriebsleitung 2 ebenfalls wie in Fig. 1 dreiphasig und mit dem Hilfsbetriebe-Anschluss verbunden. Schalter zum Unterbrechen der Notbetriebsleitung 2 oder zum Abtrennen der Notbetriebsleitung 2 von dem Hilfsbetriebe-Anschluss 11 sowie Schalter zum Trennen des Hilfsbetriebe-Wechselrichters 12, der auf seiner Gleichspannungsseite mit dem Gleichspannungs-Zwischenkreis verbunden ist, sind in Fig. 2 nicht dargestellt. Sie können insbesondere wie in Fig. 1 ausgeführt sein. Der Hilfsbetriebe-Wechselrichter 12 ist in Fig. 2 gleichspannungsseitig mit der Verbindungsleitung 34 auf dem höheren Potential direkt verbunden und mit dem anderen gleichspannungsseitigen Anschluss mit Fahrzeugmasse verbunden. Alternativ kann er direkt mit einer Leitung des Gleichspannungs-Zwischenkreises verbunden sein, z.B. Leitung 8 oder Verbindungsleitung 33.

## Patentansprüche

1. Anordnung zum Versorgen von elektrischen Traktionsmotoren in einem Schienenfahrzeug und zum Versorgen von zusätzlichen elektrischen Hilfsbetrieben (9) für den Betrieb des Schienenfahrzeugs mit elektrischer Energie, wobei die Anordnung aufweist:
- zumindest zwei Verbrennungsmotoren (1),
- für die zumindest zwei Verbrennungsmotoren (1) jeweils eine zugeordnete elektrische Maschine (3) zum Erzeugen der elektrischen Energie, wobei die elektrische Maschine (3) mechanisch mit dem Verbrennungsmotor (1) gekoppelt ist, sodass sie bei einem Generator-Betrieb der elektrischen Maschine (3) von dem Verbrennungsmotor (1) angetrieben wird, sodass zumindest eine erste und eine zweite Verbrennungsmotor-Maschinen-Kombination gebildet ist,
- zumindest einen Generator-Gleichrichter (5) zum Gleichrichten von Wechselströmen, die von den elektrischen Maschinen (3) während des Generator-Betriebes der jeweiligen elektrischen Maschine (3) erzeugt werden,
- einen Gleichspannungs-Zwischenkreis (8, 10), der über den zumindest einen Generator-Gleichrichter (5) elektrisch mit den elektrischen Maschinen (3) oder mit einem Teil der elektrischen Maschinen (3) verbunden ist, wenn die elektrische Maschine oder die elektrischen Maschinen Energie in den Gleichspannungs-Zwischenkreis (8, 10) einspeist/einspeisen, und der elektrisch mit zumindest einem Traktionsmotor verbunden ist,
- einen Hilfsbetriebe-Wechselrichter (12) mit einem Gleichspannungsanschluss und einem Wechselspannungsanschluss, der über den Gleichspannungsanschluss mit dem Gleichspannungs-Zwischenkreis (8, 10) und über den Wechselspannungsanschluss mit einem Hilfsbetriebe-Anschluss (11) der Hilfsbetriebe (9) verbunden ist, um die Hilfsbetriebe (9) mit elektrischer Energie aus dem Gleichspannungs-Zwischenkreis (8, 10) zu versorgen,
**gekennzeichnet durch**
- eine elektrische Notbetriebsleitung (2), über die die elektrische Maschine (3a) der ersten Verbrennungsmotor-Maschinen-Kombination während eines Notbetriebes, in dem der Hilfsbetriebe-Wechselrichter (12) außer Betrieb ist, mit den Hilfsbetrieben (9) verbunden ist, um die Hilfsbetriebe (9) in dem Notbetrieb mit Energie zu versorgen,
wobei die elektrische Maschine (3a) der ersten Verbrennungsmotor-Maschinen-Kombination über den Generator-Gleichrichter oder über einen (5a) der Generator-Gleichrichter (5) elektrisch mit dem Gleichspannungs-Zwischenkreis (8, 10) verbunden ist, wenn die elektrische Maschine (3a) der ersten Verbrennungsmotor-Maschinen-Kombination Energie in den Gleichspannungs-Zwischenkreis (8, 10) einspeist.

2. Anordnung nach Anspruch 1, wobei die elektrische Maschine (3a) der ersten Verbrennungsmotor-Maschinen-Kombination während des Notbetriebes über die elektrische Notbetriebsleitung (2) mit dem Hilfsbetriebe-Anschluss (11) verbunden ist.

3. Anordnung nach Anspruch 1 oder 2, wobei die elektrische Maschine (3b) der zweiten Verbrennungsmotor-Maschinen-Kombination während des Notbetriebes über den Generator-Gleichrichter (5) oder über zumindest einen der Generator-Gleichrichter (5) mit dem Gleichspannungs-Zwischenkreis (8, 10) verbunden ist, um den an den Gleichspannungs-Zwischenkreis (8, 10) angeschlossenen zumindest einen Traktionsmotor aus dem Gleichspannungs-Zwischenkreis (8, 10) mit elektrischer Energie zu versorgen.

4. Anordnung nach einem der Ansprüche 1 bis 3, wobei zwischen dem Wechselspannungsanschluss des Hilfsbetriebe-Wechselrichters (12) und dem Hilfsbetriebe-Anschluss (11) ein Trennschalter angeordnet ist, der den Hilfsbetriebe-Wechselrichter (12) in dem Notbetrieb von dem Hilfsbetriebe-Anschluss (11) trennt.

5. Anordnung nach einem der Ansprüche 1 bis 4, wobei ein Notbetriebsschalter mit der Notbetriebsleitung (2) kombiniert ist, über den lediglich während des Notbetriebes die elektrische Verbindung der Notbetriebsleitung (2) von der elektrischen Maschine der ersten Verbrennungsmotor-Maschinen-Kombination zu den Hilfsbetrieben (9) hergestellt ist.

6. Anordnung nach einem der Ansprüche 1 bis 5, wobei für die elektrischen Maschinen jeweils ein Maschinen-Stromrichter (23) vorgesehen ist, wobei ein Wechselspannungsanschluss des Maschinen-Stromrichters (23) mit der elektrischen Maschine (3) verbunden ist, um die elektrische Maschine (3) während eines Motor-Betriebes der elektrischen Maschine als Motor zu betreiben, wobei die Anordnung einen elektrischen Anschluss zum Anschließen an einen elektrisch entladbaren Energiespeicher (38) aufweist und wobei der elektrische Anschluss mit zumindest einem der Maschinen-Stromrichter (23) verbunden ist, um während des Motor-Betriebes der elektrischen Maschine (3) Energie aus dem Energiespeicher (38) für den Motor-Betrieb zu liefern.

7. Anordnung nach einem der Ansprüche 1 bis 6, wobei für die elektrischen Maschinen jeweils ein Maschinen-Stromrichter (23) vorgesehen ist, wobei ein Wechselspannungsanschluss des Maschinen-Stromrichters (23) mit der elektrischen Maschine (3) verbunden ist, um die elektrische Maschine (3) während eines Motor-Betriebes der elektrischen Maschine als Motor zu betreiben, und wobei der Gleichspannungs-Zwischenkreis (8, 10) mit zumindest einem Teil der Maschinen-Stromrichter (23) verbunden ist, um die jeweilige elektrische Maschine (3) während eines Motor-Betriebes mit Energie aus dem Gleichspannungs-Zwischenkreis zu versorgen.

8. Schienenfahrzeug, aufweisend eine Anordnung nach einem der Ansprüche 1-7, wobei zumindest ein Traktionsmotor des Schienenfahrzeugs elektrisch an den Gleichspannungs-Zwischenkreis (8, 10) angeschlossen ist und zusätzliche elektrische Hilfsbetriebe (9) des Schienenfahrzeugs an die Notbetriebsleitung (2) der Anordnung angeschlossen oder anschließbar sind.

9. Verwendung einer Anordnung mit zumindest einer ersten und einer zweiten Verbrennungsmotor-Maschinen-Kombination, zumindest einem Generator-Gleichrichter (5), einem Gleichspannungs-Zwischenkreis (8, 10) und einer elektrischen Notbetriebsleitung zum Versorgen von elektrischen Traktionsmotoren in einem Schienenfahrzeug und zum Versorgen von zusätzlichen elektrischen Hilfsbetrieben (9) für den Betrieb des Schienenfahrzeugs mit elektrischer Energie, wobei:
- zumindest zwei Verbrennungsmotoren (1) jeweils in Kombination mit einer zugeordneten elektrischen Maschine (3) betrieben werden, sodass zumindest die erste und die zweite Verbrennungsmotor-Maschinen-Kombination betrieben werden,
- die elektrischen Maschinen während eines Generator-Betriebes der jeweiligen elektrischen Maschine (3) angetrieben durch den Verbrennungsmotor Wechselstrom erzeugen, der in einem ersten Betriebszustand über zumindest einen Generator-Gleichrichter (5) gleichgerichtet und als Gleichstrom in den Gleichspannungs-Zwischenkreis (8, 10) eingespeist wird,
- aus dem Gleichspannungs-Zwischenkreis (8, 10) elektrische Energie zu zumindest einem Traktionsmotor des Schienenfahrzeugs geliefert wird,
- in dem ersten Betriebszustand elektrische Energie aus dem Gleichspannungs-Zwischenkreis (8, 10) entnommen und über einen Hilfsbetriebe-Wechselrichter (12) sowie über einen Hilfsbetriebe-Anschluss (11) an die Hilfsbetriebe (9) geliefert wird,
in einem zweiten Betriebszustand, in dem der Hilfsbetriebe-Wechselrichter (12) außer Betrieb ist und der ein Notbetriebszustand ist, elektrische Energie von der elektrischen Maschine (3a) der ersten Verbrennungsmotor-Maschinen-Kombination über eine elektrische Notbetriebsleitung (2) zu den Hilfsbetrieben (9) geliefert wird.

10. Verwendung nach Anspruch 9, wobei die elektrische Maschine (3b) der zweiten Verbrennungsmotor-Maschinen-Kombination während des Notbetriebes über den Generator-Gleichrichter (5) oder über zumindest einen der Generator-Gleichrichter (5) elektrische Energie in den Gleichspannungs-Zwischenkreis (8, 10) einspeist und der zumindest eine Traktionsmotor aus dem Gleichspannungs-Zwischenkreis (8, 10) mit elektrischer Energie versorgt wird.

11. Verwendung nach Anspruch 9 oder 10, wobei zur Umschaltung von dem ersten Betriebszustand in den zweiten Betriebszustand ein Trennschalter zwischen einem Wechselspannungsanschluss des Hilfsbetriebe-Wechselrichters (12) und dem Hilfsbetriebe-Anschluss (11) geöffnet wird, um den Hilfsbetriebe-Wechselrichter (12) elektrisch von dem Hilfsbetriebe-Anschluss (11) zu trennen.

12. Verfahren zur Herstellung einer Anordnung zum Versorgen von elektrischen Traktionsmotoren in einem Schienenfahrzeug und zum Versorgen von zusätzlichen elektrischen Hilfsbetrieben (9) für den Betrieb des Schienenfahrzeugs mit elektrischer Energie, wobei:
- zumindest zwei Verbrennungsmotoren (1) bereitgestellt werden,
- für die zumindest zwei Verbrennungsmotoren (1) jeweils eine zugeordnete elektrische Maschine (3) zum Erzeugen der elektrischen Energie bereitgestellt wird und derart mechanisch mit dem Verbrennungsmotor (1) gekoppelt wird, dass sie bei einem Generator-Betrieb der elektrischen Maschine (3) von dem Verbrennungsmotor (1) angetrieben wird, sodass zumindest eine erste und eine zweite Verbrennungsmotor-Maschinen-Kombination gebildet wird,
- die elektrischen Maschinen (3) über zumindest einen Generator-Gleichrichter (5) zum Gleichrichten von Wechselströmen elektrisch mit einem Gleichspannungs-Zwischenkreis (8, 10) verbunden werden,
- an dem Gleichspannungs-Zwischenkreis (8, 10) ein elektrischer Traktions-Anschluss zum Anschließen zumindest eines Traktionsmotors vorgesehen wird,
- ein Hilfsbetriebe-Wechselrichter (12) bereitgestellt wird und ein Gleichspannungsanschluss des Hilfsbetriebe-Wechselrichters (12) mit dem Gleichspannungs-Zwischenkreis (8, 10) und ein Wechselspannungsanschluss des Hilfsbetriebe-Wechselrichters (12) mit einem Hilfsbetriebe-Anschluss (11) zum Anschließen der Hilfsbetriebe (9) verbunden werden,
- die elektrische Maschine (3a) der ersten Verbrennungsmotor-Maschinen-Kombination über eine elektrische Notbetriebsleitung (2) elektrisch mit einer elektrischen Versorgungsleitung der Hilfsbetriebe (9) verbunden wird, wobei die durch die elektrische Notbetriebsleitung (2) vorgesehene elektrische Verbindung durch zumindest einen Notbetriebsschalter einschaltbar ist, um einen Notbetrieb der Hilfsbetriebe (9) ohne den Hilfsbetriebe-Wechselrichter (12) zu ermöglichen, und die elektrische Verbindung andernfalls ausschaltbar ist.

13. Verfahren nach Anspruch 12, wobei zwischen einem Wechselspannungsanschluss des Hilfsbetriebe-Wechselrichters (12) und dem Hilfsbetriebe-Anschluss (11) ein Trennschalter angeordnet wird, durch den der Hilfsbetriebe-Wechselrichter (12) für den Notbetrieb von dem Hilfsbetriebe-Anschluss (11) trennbar ist.

14. Verfahren nach Anspruch 12 oder 13, wobei für die elektrischen Maschinen jeweils ein Maschinen-Stromrichter (23) bereitgestellt wird und ein Wechselspannungsanschluss des Maschinen-Stromrichters (23) mit der elektrischen Maschine verbunden wird, um die elektrische Maschine (3) während eines Motor-Betriebes der elektrischen Maschine als Motor zu betreiben, und wobei ein elektrischer Anschluss zum Anschließen an einen elektrisch entladbaren Energiespeicher (38) mit zumindest einem der Maschinen-Stromrichter (23) verbunden wird, um während des Motor-Betriebes der elektrischen Maschine Energie aus dem Energiespeicher (38) für den Motor-Betrieb zu liefern.

15. Verfahren nach einem der Ansprüche 12 bis 14, wobei der Gleichspannungs-Zwischenkreis (8, 10) mit zumindest einem Teil der Maschinen-Stromrichter (23) verbunden wird, um die jeweilige elektrische Maschine (3) während eines Motor-Betriebes mit Energie aus dem Gleichspannungs-Zwischenkreis zu versorgen.

## Claims

1. An arrangement for supplying electrical energy to electric traction motors in a rail vehicle and for supplying electrical energy to additional electric auxiliaries (9) for the operation of the rail vehicle, wherein the arrangement comprises:
- at least two internal combustion engines (1),
- for each of the at least two internal combustion engines (1), an electric machine (3) assigned to it for generating the electrical energy, wherein the electric machine (3) is mechanically coupled to the internal combustion engine (1) so that the electric machine (3) is driven by the internal combustion engine (1) in the event of a generator operation of the electric machine (3) so that at least a first and a second internal combustion engine and machine combination are formed,
- at least one generator rectifier (5) for rectifying alternating currents which are generated by the electric machines (3) during the generator operation of the respective electric machine (3),
- a DC link (8, 10), which is electrically connected to the electric machines (3) or to a part of the electric machines (3) via the at least one generator rectifier (5) if the electric machine or the electric machines feeds/feed energy into the DC link (8, 10), and which is electrically connected to at least one traction motor,
- an auxiliaries inverter (12) with a direct voltage connector and an alternating voltage connector, which auxiliaries inverter (12) is connected to the DC link (8, 10) via the direct voltage connector and is connected to an auxiliaries connector (11) of the auxiliaries (9) via the alternating voltage connector in order to supply electrical energy from the DC link (8, 10) to the auxiliaries (9),
**characterised by**
- an emergency operation electric line (2), via which the electric machine (3a) of the first internal combustion engine and machine combination is connected to the auxiliaries (9) during an emergency operation, in which case the auxiliaries inverter (12) is out of operation, in order to supply energy to the auxiliaries (9) in the emergency operation, wherein the electric machine (3a) of the first internal combustion engine and machine combination is electrically connected to the DC link (8, 10) via the generator inverter or via one (5a) of the generator inverters (5) if the electric machine (3a) of the first internal combustion engine and machine combination feeds energy into the DC link (8, 10).

2. The arrangement according to claim 1, wherein the electric machine (3a) of the first internal combustion engine and machine combination is connected to the auxiliaries connector (11) during the emergency operation via the emergency operation electric line (2).

3. The arrangement according to claim 1 or 2, wherein the electric machine (3b) of the second internal combustion engine and machine combination is connected to the DC link (8, 10) during the emergency operation via the generator rectifier (5) or via at least one of the generator rectifiers (5) in order to supply electrical energy from the DC link (8, 10) to the at least one traction motor connected to the DC link (8, 10).

4. The arrangement according to any one of claims 1 to 3, wherein an isolating switch is arranged between the alternating voltage connector of the auxiliaries inverter (12) and the auxiliaries connector (11), which isolating switch disconnects the auxiliaries inverter (12) from the auxiliaries connector (11) during the emergency operation.

5. The arrangement according to any one of claims 1 to 4, wherein an emergency operation switch is combined with the emergency operation line (2), via which emergency operation switch the electrical connection of the emergency operation line (2) from the electric machine of the first internal combustion engine and machine combination to the auxiliaries (9) is established only during the emergency operation.

6. The arrangement according to any one of claims 1 to 5, wherein for each of the electric machines there is provided a machine power converter (23), wherein an alternating voltage connector of the machine power converter (23) is connected to the electric machine (3) in order to operate the electric machine (3) as a motor during a motor operation of the electric machine, wherein the arrangement comprises an electric connector for connection to an energy store (38) from which electrical energy can be drawn, and wherein the electric connector is connected to at least one of the machine power converters (23) in order to deliver energy from the energy store (38) for the motor operation during the motor operation of the electric machine (3).

7. The arrangement according to any one of claims 1 to 6, wherein for each of the electric machines there is provided a machine power converter (23), wherein an alternating voltage connector of the machine power converter (23) is connected to the electric machine (3) in order to operate the electric machine (3) as a motor during a motor operation of the electric machine, and wherein the DC link (8, 10) is connected to at least a part of the machine power converters (23) in order to supply energy from the DC link to the respective electric machine (3) during a motor operation.

8. A rail vehicle comprising an arrangement according to any one of claims 1-7, wherein at least one traction motor of the rail vehicle is electrically connected to the DC link (8, 10) and additional electric auxiliaries (9) of the rail vehicle are connected or can be connected to the emergency operation line (2) of the arrangement.

9. Use of an arrangement having at least a first and a second internal combustion engine and machine combination, at least one generator rectifier (5), a DC link (8, 10), and an emergency operation electric line for supplying electrical energy to electric traction motors in a rail vehicle and for supplying electrical energy to additional electric auxiliaries (9) for the operation of the rail vehicle, wherein:
- at least two internal combustion engines (1) are operated in each case in combination with an assigned electric machine (3), so that at least the first and the second internal combustion engine and machine combination are operated,
- driven by the internal combustion engine, the electric machines generate alternating current during a generator operation of the corresponding electric machine (3), which alternating current is rectified in a first operating state via at least one generator rectifier (5) and is fed as direct current into the DC link (8, 10),
- electrical energy is supplied from the DC link (8, 10) to at least one traction motor of the rail vehicle,
- in the first operating state, electrical energy is drawn from the DC link (8, 10) and is delivered to the auxiliaries (9) via an auxiliaries inverter (12) and via an auxiliaries connector (11),
in a second operating state, in which the auxiliaries inverter (12) is out of operation and which is an emergency operation state, electrical energy is delivered from the electric machine (3a) of the first internal combustion engine and machine combination to the auxiliaries (9) via an emergency operation electric line (2).

10. The use according to claim 9, wherein the electric machine (3b) of the second internal combustion engine and machine combination feeds electrical energy into the DC link (8, 10) during the emergency operation via the generator rectifier (5) or via at least one of the generator rectifiers (5) and the at least one traction motor is supplied with electrical energy from the DC link (8, 10).

11. The use according to claim 9 or 10, wherein in order to switch over from the first operating state into the second operating state an isolating switch is opened between an alternating voltage connector of the auxiliaries inverter (12) and the auxiliaries connector (11) in order to electrically disconnect the auxiliaries inverter (12) from the auxiliaries connector (11).

12. A method for producing an arrangement for supplying electrical energy to electric traction motors in a rail vehicle and for supplying electrical energy to additional electric auxiliaries (9) for the operation of the rail vehicle, wherein:
- at least two internal combustion engines (1) are provided,
- for the at least two internal combustion engines (1), in each case an assigned electric machine (3) for generating the electrical energy is provided and is mechanically coupled to the internal combustion engine (1) so that the electric machine is driven by the internal combustion engine (1) in the event of a generator operation of the electric machine (3) so that at least a first and a second internal combustion engine and machine combination are formed,
- the electric machines (3) are electrically connected to a DC link (8, 10) via at least one generator rectifier (5) for rectifying alternating currents,
- an electric traction connector for connection of at least one traction motor is provided at the DC link (8, 10),
- an auxiliaries inverter (12) is provided and a direct voltage connector of the auxiliaries inverter (12) is connected to the DC link (8, 10) and an alternating voltage connector of the auxiliaries inverter (12) is connected to an auxiliaries connector (11) for connection of the auxiliaries (9),
- the electric machine (3a) of the first internal combustion engine and machine combination is electrically connected to an electric supply line of the auxiliaries (9) via an emergency operation electric line (2), wherein the electrical connection provided by the emergency operation electric line (2) can be switched on by at least one emergency operation switch in order to enable an emergency operation of the auxiliaries (9) without the auxiliaries inverter (12), and the electrical connection otherwise can be switched off.

13. The method according to claim 12, wherein an isolating switch is arranged between an alternating voltage connector of the auxiliaries inverter (12) and the auxiliaries connector (11), by means of which isolating switch the auxiliaries inverter (12) can be disconnected from the auxiliaries connector (11) for the emergency operation.

14. The method according to claim 12 or 13, wherein for the electric machines there is in each case provided a machine power converter (23), and an alternating voltage connector of the machine power converter (23) is connected to the electric machine in order to operate the electric machine (3) as a motor during a motor operation of the electric machine, and wherein an electric connector for connection to an energy store (38) from which electrical energy can be drawn is connected to at least one of the machine power converters (23) in order to deliver energy from the energy store (38) for the motor operation during the motor operation of the electric machine.

15. The method according to any one of claims 12 to 14, wherein the DC link (8, 10) is connected to at least a part of the machine power converters (23) in order to supply energy from the DC link to the respective electric machine (3) during a motor operation.

## Revendications

1. Agencement destiné à alimenter des moteurs de traction électriques dans un véhicule ferroviaire et destiné à alimenter en énergie électrique des systèmes auxiliaires (9) électriques supplémentaires pour le fonctionnement du véhicule ferroviaire, dans lequel l'agencement présente :
- au moins deux moteurs à combustion interne (1),
- pour les au moins deux moteurs à combustion interne (1) respectivement une machine électrique (3) associée destinée à générer l'énergie électrique, dans lequel la machine électrique (3) est couplée mécaniquement au moteur à combustion interne (1), de sorte qu'elle soit entraînée par le moteur à combustion interne (1) lors d'un fonctionnement de générateur de la machine électrique (3), de sorte qu'au moins une première et une deuxième combinaison moteur à combustion interne-machine soient formées,
- au moins un redresseur de générateur (5) destiné au redressement de courants alternatifs, qui sont générés par les machines électriques (3) pendant le fonctionnement de générateur de la machine électrique (3) respective,
- un circuit intermédiaire à tension continue (8, 10) qui est relié électriquement par l'intermédiaire de l'au moins un redresseur de générateur (5) aux machines électriques (3) ou à une partie des machines électriques (3), lorsque la machine électrique ou les machines électriques injecte/injectent de l'énergie dans le circuit intermédiaire à tension continue (8, 10), et qui est relié électriquement à au moins un moteur de traction,
- un onduleur de système auxiliaire (12) avec une borne de courant continu et une borne de courant alternatif, qui est relié par l'intermédiaire de la borne de tension continue au circuit intermédiaire à tension continue (8, 10) et par l'intermédiaire de la borne de tension alternative à une borne de système auxiliaire (11) des systèmes auxiliaires (9), pour alimenter les systèmes auxiliaires (9) en énergie électrique en provenance du circuit intermédiaire à tension continue (8, 10), **caractérisé par**
- une ligne d'urgence électrique (2) par l'intermédiaire de laquelle la machine électrique (3a) de la première combinaison moteur à combustion interne-machine est reliée pendant un fonctionnement d'urgence, dans lequel l'onduleur de système auxiliaire (12) est hors service, aux systèmes auxiliaires (9) pour alimenter les systèmes auxiliaires (9) en énergie lors du fonctionnement d'urgence,
dans lequel la machine électrique (3a) de la première combinaison moteur à combustion interne-machine est reliée électriquement par l'intermédiaire du redresseur de générateur ou par l'intermédiaire de l'un (5a) des redresseurs de générateur (5) au circuit intermédiaire à tension continue (8, 10), lorsque la machine électrique (3a) de la première combinaison moteur à combustion interne-machine injecte de l'énergie dans le circuit intermédiaire à tension continue (8, 10).

2. Agencement selon la revendication 1, dans lequel la machine électrique (3a) de la première combinaison moteur à combustion interne-machine pendant le fonctionnement d'urgence est reliée par l'intermédiaire de la ligne de fonctionnement d'urgence (2) à la borne de système auxiliaire (11).

3. Agencement selon la revendication 1 ou 2, dans lequel la machine électrique (3b) de la deuxième combinaison moteur à combustion interne-machine est reliée par l'intermédiaire du redresseur de générateur (5) ou par l'intermédiaire d'au moins un des redresseurs de générateur (5) au circuit intermédiaire à tension continue (8, 10) pour alimenter en énergie électrique l'au moins un moteur de traction raccordé au circuit intermédiaire à tension continue (8, 10) à partir du circuit intermédiaire à tension continue (8, 10).

4. Agencement selon l'une des revendications 1 à 3, dans lequel entre la borne à tension alternative de l'onduleur de système auxiliaire (12) et la borne de système auxiliaire (11) un disjoncteur est disposé qui sépare l'onduleur de système auxiliaire (12) lors du fonctionnement d'urgence de la borne de système auxiliaire (11).

5. Agencement selon l'une des revendications 1 à 4, dans lequel un commutateur de fonctionnement d'urgence est combiné avec une ligne de fonctionnement d'urgence (2), par l'intermédiaire duquel uniquement pendant le fonctionnement d'urgence la liaison électrique de la ligne de fonctionnement d'urgence (2) est produite par la machine électrique de la première combinaison moteur à combustion interne-machine pour les systèmes auxiliaires (9).

6. Agencement selon l'une des revendications 1 à 5, dans lequel pour les machines électriques respectivement un convertisseur de courant de machine (23) est prévu, dans lequel une borne de tension alternative du convertisseur de courant de machine (23) est reliée à la machine électrique (3) pour faire fonctionner en tant que moteur la machine électrique (3) pendant un fonctionnement de moteur de la machine électrique, dans lequel l'agencement présente une borne électrique destinée au raccordement à un accumulateur d'énergie électriquement déchargeable (38) et dans lequel la borne électrique est reliée à au moins un des convertisseurs de courant de machine (23) pour délivrer pendant le fonctionnement de moteur de la machine électrique (3) de l'énergie en provenance de l'accumulateur d'énergie (38) pour le fonctionnement de moteur.

7. Agencement selon l'une des revendications 1 à 6, dans lequel pour les machines électriques respectivement un convertisseur de courant de machine (23) est prévu, dans lequel une borne de tension alternative du convertisseur de courant de machine (23) est reliée à la machine électrique (3) pour faire fonctionner en tant que moteur la machine électrique (3) pendant un fonctionnement de moteur de la machine électrique, et dans lequel le circuit intermédiaire à tension continue (8, 10) est relié à au moins une partie du convertisseur de courant de machine (23) pour alimenter en énergie en provenance du circuit intermédiaire à tension continue la machine électrique (3) respective pendant un fonctionnement de moteur.

8. Véhicule ferroviaire présentant un agencement selon l'une des revendications 1-7, dans lequel au moins un moteur de traction du véhicule ferroviaire est raccordé électriquement au circuit intermédiaire à tension continue (8, 10) et des systèmes auxiliaires (9) électriques supplémentaires du véhicule ferroviaire sont raccordés ou peuvent être raccordés à la ligne de fonctionnement d'urgence (2) de l'agencement.

9. Utilisation d'un agencement avec au moins une première et une deuxième combinaison moteur à combustion interne-machine, au moins un redresseur de générateur (5), un circuit intermédiaire à tension continue (8, 10) et une ligne de fonctionnement d'urgence électrique en vue de l'alimentation de moteurs de traction électriques dans un véhicule ferroviaire et en vue de l'alimentation en énergie électrique de systèmes auxiliaires (9) électriques supplémentaires pour le fonctionnement du véhicule ferroviaire, dans lequel :
- au moins deux moteurs à combustion interne (1) fonctionnent respectivement avec une machine électrique (3) associée, de sorte qu'au moins la première et la deuxième combinaison moteur à combustion interne-machine fonctionnent,
- les machines électriques pendant un fonctionnement de générateur de la machine électrique (3) respective entraînées par le biais du moteur à combustion interne génèrent un courant alternatif, qui est redressé dans un premier état de fonctionnement par l'intermédiaire d'au moins un redresseur de générateur (5) et est injecté en tant que courant continu dans le circuit intermédiaire à tension continue (8, 10),
- à partir du circuit intermédiaire à tension continue (8, 10) de l'énergie électrique est délivrée à au moins un moteur de traction du véhicule ferroviaire,
- dans le premier état de fonctionnement de l'énergie électrique est extraite du circuit intermédiaire à tension continue (8, 10) et est délivrée par l'intermédiaire d'un onduleur de système auxiliaire (12) ainsi que par l'intermédiaire d'une borne de système auxiliaire (11) aux systèmes auxiliaires (9),
dans un deuxième état de fonctionnement dans lequel l'onduleur de système auxiliaire (12) est hors service et qui est un état de fonctionnement d'urgence, de l'énergie électrique est délivrée par la machine électrique (3a) de la première combinaison moteur à combustion interne-machine par l'intermédiaire d'une ligne de fonctionnement d'urgence (2) aux systèmes auxiliaires (9).

10. Utilisation selon la revendication 9, dans laquelle la machine électrique (3b) de la deuxième combinaison moteur à combustion interne-machine pendant le fonctionnement d'urgence injecte de l'énergie électrique dans le circuit intermédiaire à tension continue (8, 10) par l'intermédiaire du redresseur de générateur (5) ou par l'intermédiaire d'au moins l'un des redresseurs de générateur (5) et l'au moins un moteur de traction est alimenté en énergie électrique à partir du circuit intermédiaire à tension continue (8, 10).

11. Utilisation selon la revendication 9 ou 10, dans laquelle en vue de la commutation du premier état de fonctionnement dans le deuxième état de fonctionnement un disjoncteur est ouvert entre une borne de tension alternative de l'onduleur de système auxiliaire (12) et la borne de système auxiliaire (11) pour séparer électriquement l'onduleur de système auxiliaire (12) de la borne de système auxiliaire (11).

12. Procédé destiné à la production d'un agencement destiné à l'alimentation de moteurs de traction électriques dans un véhicule ferroviaire et destiné à l'alimentation en énergie électrique de systèmes auxiliaires (9) électriques supplémentaires pour le fonctionnement du véhicule ferroviaire, dans lequel :
- au moins deux moteurs à combustion interne (1) sont mis à disposition,
- pour les au moins deux moteurs à combustion interne (1) respectivement une machine électrique (3) associée en vue de la génération de l'énergie électrique est mise à disposition et couplée mécaniquement au moteur à combustion interne (1) de telle sorte qu'elle est entraînée par le moteur à combustion interne (1) lors d'un fonctionnement de générateur de la machine électrique (3), de sorte qu'au moins une première et une deuxième combinaison moteur à combustion interne-machine soient formées,
- les machines électriques (3) sont reliées électriquement à un circuit intermédiaire à tension continue (8, 10) par l'intermédiaire d'au moins un redresseur de générateur (5) destiné au redressement de courants alternatifs,
- au niveau du circuit intermédiaire à tension continue (8 10) est prévue une borne de traction électrique destinée au raccordement d'au moins un moteur de traction,
- un onduleur de système auxiliaire (12) est mis à disposition et une borne de tension continue de l'onduleur de système auxiliaire (12) est reliée au circuit intermédiaire à tension continue (8, 10) et une borne de tension alternative de l'onduleur de système auxiliaire (12) est reliée à une borne de système auxiliaire (11) destinée au raccordement des systèmes auxiliaires (9),
- la machine électrique (3a) de la première combinaison moteur à combustion interne-machine est reliée électriquement à une ligne d'alimentation électrique des systèmes auxiliaires (9) par l'intermédiaire d'une ligne de fonctionnement d'urgence électrique (2), dans lequel la liaison électrique prévue par le biais de la ligne de fonctionnement d'urgence (2) peut être activée par le biais d'au moins un commutateur de fonctionnement d'urgence pour rendre possible un fonctionnement d'urgence des systèmes auxiliaires (9) sans l'onduleur de système auxiliaire (12) et la liaison électrique peut autrement être désactivée.

13. Procédé selon la revendication 12, dans lequel entre une borne de tension alternative de l'onduleur de système auxiliaire (12) et la borne de système auxiliaire (11) est disposé un disjoncteur par le biais duquel l'onduleur de système auxiliaire (12) peut être séparé de la borne de système auxiliaire (11) pour le fonctionnement d'urgence.

14. Procédé selon la revendication 12 ou 13, dans lequel pour les machines électriques respectivement un convertisseur de courant de machine (23) est mis à disposition et une borne de tension alternative du convertisseur de courant de machine (23) est reliée à la machine électrique pour faire fonctionner la machine électrique (3) en tant que moteur pendant un fonctionnement de moteur de la machine électrique, et dans lequel une borne électrique destinée au raccordement à un accumulateur d'énergie électriquement déchargeable (38) est reliée à au moins un des convertisseurs de courant de machine (23) pour délivrer pendant le fonctionnement de moteur de la machine électrique de l'énergie en provenance de l'accumulateur d'énergie (38) pour le fonctionnement de moteur.

15. Procédé selon l'une des revendications 12 à 14, dans lequel le circuit intermédiaire à tension continue (8, 10) est relié à au moins une partie des convertisseurs de courant de machine (23) pour alimenter la machine électrique (3) respective en énergie en provenance du circuit intermédiaire à tension continue pendant un fonctionnement de moteur.
